# EUROPÄISCHE PATENTSCHRIFT

(11) **EP 2 089 633 B1**
(45) Veröffentlichungstag und Bekanntmachung des Hinweises auf die Patenterteilung: **13.05.2015**
(21) Anmeldenummer: 07819386.9
(22) Anmeldetag: 27.10.2007
(51) Int. Cl.: F16C 23/08, F16C 27/04, F16C 33/36

(54) **KEGELSTUMPFARTIGER WÄLZKÖRPER UND KEGELROLLENLAGERUNG MIT DEN WÄLZKÖRPERN**
TRUNCATED CONE-TYPE ROLLING BODY AND TAPERED ROLLER BEARING COMPRISING ROLLING BODIES
CORPS DE ROULEMENT TRONCONIQUE ET ROULEMENT À ROULEAUX CONIQUES COMPORTANT DE TELS CORPS DE ROULEMENT

(30) Priorität: 04.11.2006 DE 102006052044
(43) Veröffentlichungstag der Anmeldung: 19.08.2009
(73) Patentinhaber: AB SKF, 415 50 Göteborg (SE)
(72) Erfinder: KRUG, Udo, 97531 Theres (DE); OLSCHEWSKI, Armin, 97422 Schweinfurt (DE); STUBENRAUCH, Arno, 97491 Aidhausen (DE); DOP, Gerrit-Jan, NL-2406 KE Alphen aan den Rijn (NL)
(74) Vertreter: Kohl, Thomas
(86) Internationale Anmeldenummer: PCT/EP2007/009343
(87) Internationale Veröffentlichungsnummer: WO 2008/052717

(56) Entgegenhaltungen:
- GB-A- 1 327 646
- JP-A- 2000 170 771
- US-A- 1 397 142
- US-A- 2 215 701
- US-A1- 2005 229 395

## Beschreibung

Die Erfindung betrifft einen kegelstumpfartigen Wälzkörper und eine Kegelrollenlagerung mit den Wälzkörpern.

Anders als bei Gleitlagern wird bei Wälzlagern bekanntlich die Last unter einem Abwälzen übertragen, so dass die Reibung insbesondere auch bei niedrigen Drehzahlen und beim Anfahren gering ist. Die geringe Anlaufreibung und der Umstand, dass kein Einlaufen notwendig ist, sind insbesondere bei Fahrzeugen wichtige Vorteile. Der geringen Reibung entsprechen mit Vorteil geringe Leistungsverluste. Unter den Wälzlagern ist dabei das Kegelrollenlager ein nicht nur in Fahrzeugen weitverbreiteter Wälzlagertyp. Im Sinne eines nachhaltigen Wirtschaftens mit den verfügbaren Rohstoff- und Energiereserven wird weiterhin, und nichtausschließlich auf das Gebiet der Fahrzeuge begrenzt, nach Möglichkeiten gesucht, die Leistungsverluste weiter zu senken.

Aus der US-A-2005/0 229 395 ist eine zylinderförmige Keramikrolle für ein Wälzlager bekannt, in deren Stirnflächen mehrere diffusionszeitreduzierende sowie sintermaterialeinsparende Hohlräume eingeformt sind, wobei die Hohlräume in jeder Rollenstirnfläche einenteils als axiale Zentrierbohrungen mit zylindrischem Querschnitt und anderenteils als zu den Zentrierbohrungen koaxiale Lüftungsbohrungen mit zylindrischem Querschnitt ausgebildet sind. Dabei entspricht der Durchmesser der Zentrierbohrungen insbesondere 25 bis 30% und der der Lüftungsbohrungen 5 bis 10% des Rollendurchmessers.

Eine Aufgabe der Erfindung ist es, einen verbesserten kegelstumpfartigen Wälzkörper und damit eine verbesserte Kegelrollenlagerung mit den Wälzkörpern derart zu schaffen, so dass sich bei deren Betrieb besonders geringe Leistungsverluste ergeben.

Die Aufgabe wird hinsichtlich des kegelstumpfartigen Wälzkörpers durch den Gegenstand des Anspruchs 1 und hinsichtlich der Kegelrollenlagerung durch die Gegenstände der Ansprüche 12 bis 14 gelöst. Vorteilhafte Ausgestaltungen sind in den weiteren Unteransprüchen beschrieben.

Die Erfindung beruht dabei auf der Erkenntnis, dass sich mit einem kegelstumpfartigen Wälzkörper, der ausgehend von seinen beiden Stirnseiten mit jeweils einer Höhlung ausgebildet ist, wobei zwischen den Höhlungen ein mit Material des Wälzkörpers ausgefüllter Zwischenbereich verbleibt, dessen minimale axiale Dicke zwischen 20 bis 60 % der axialen Wälzkörperlänge ist, bei Aufrechterhaltung guter wälzlagertechnischer Eigenschaften, mit Vorteil eine Einsparung an Material und an Gewicht erzielen lässt. Dabei werden durch die Materialeinsparung die Rohstoffreserven geschont und infolge des geringeren, bei Betrieb zu wälzenden Gewichts der Wälzkörper, Leistungsverluste reduziert sind. Weiterhin wurde erkannt, dass bei einem Unterschreiten der minimalen axialen Dicke von 20 % der axialen Wälzkörperlänge sich die wälzlagertechnischen Eigenschaften inakzeptabel verschlechtern. Andererseits wurde erkannt, dass die minimale axiale Dicke nicht größer als 60 % der axialen Wälzkörperlänge sein soll, da dies hinsichtlich Material- und Gewichtseinsparung kontraproduktiv wäre und weiterhin beim Abrollen des Wälzkörpers auf einer entsprechenden Abrollfläche an den Übergangsbereichen vom Außenmantel des Wälzkörpers hin zu seinen Stirnseiten unerwünscht hohe mechanische Spannungsspitzen auftreten würden. Dadurch, dass die Höhlungen eine gewisse Tiefe aufweisen und die Höhlungen in ihrem im wesentlichen zylindrischen Bereich einen Durchmesser zwischen 40 % bis 70 % des Wälzkörperaußendurchmessers an der die Öffnung der jeweiligen Höhlung beinhaltenden Stirnseite aufweisen bzw. eine Wandstärke des Wälzkörpers im Bereich der Höhlungen zwischen 15 % und 30 % des Wälzkörperaußendurchmessers an der die Öffnung der jeweiligen Höhlung beinhaltenden Stirnseite ist, werden besagte unerwünschte Spannungsspitzen dadurch verhindert, dass die axialen Enden des Wälzkörpers eine gewisse Einfederungsmöglichkeit nach innen hin aufweisen. Weiterhin ist zur Verhinderung besagter unerwünschter Spannungsspitzen der Wälzkörper in seinen Übergangsbereichen vom Außenmantel hin zu seinen Stirnseiten mit Verrundungen ausgebildet, die an die jeweilige Belastungsanforderung entsprechend angepasst ausgebildet sein können.

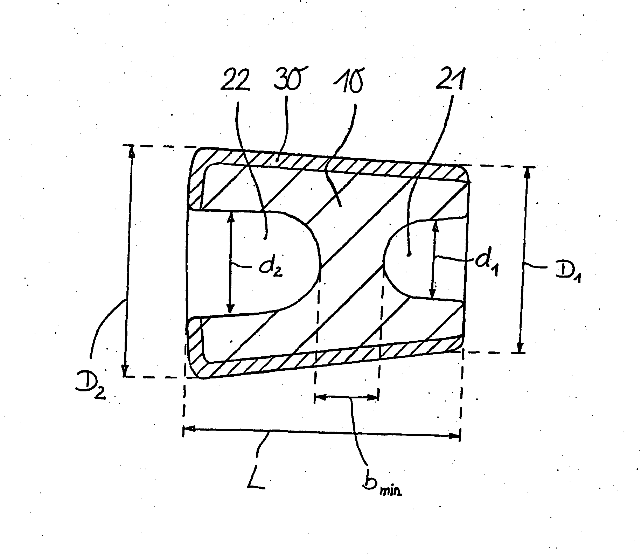

Weitere Vorteile, Merkmale und Einzelheiten ergeben sich aus dein im folgenden beschriebenen Ausführungsbeispiel der Erfindung anhand der Figur.

Die Figur zeigt als ein Ausführungsbeispiel der Erfindung einen Längsschnitt durch einen kegelstumpfartigen Wälzkörper 10. Dabei ist der Wälzkörper 10 ausgehend von seinen beiden Stirnseiten mit Höhlungen 21 und 22 ausgebildet. Zwischen den beiden Höhlungen 21 und 22 verbleibt ein mit Material des Wälzkörpers 10 ausgefüllter Zwischenbereich, dessen minimale axiale Dicke bₘᵢₙ ca. 25 % der axialen Wälzkörperlänge L ist. Gemäß dem allgemeinen Grundgedanken der Erfindung ist dabei besagte minimale axiale Dicke bₘᵢₙ zwischen 20 bis 60 %, insbesondere zwischen 20 und 40 % der axialen Wälzkörperlänge L ausgebildet.

Der Wälzkörper 10 ist dabei materialeinheitlich und einstückig insbesondere aus einem härtbaren Stahl ausgebildet. Die Höhlungen 21 und 22 sind zum Zwischenbereich hin sphärisch ausgebildet, wobei die Höhlung 22 am durchmessergrößeren axialen Ende des Wälzkörpers 10 tiefer ausgebildet ist als die Höhlung 21 am durchmesserkleineren axialen Ende des Wälzkörpers 10.

Die Höhlung 21 ist dabei in ihrem im wesentlichen zylindrischen Bereich mit einem Durchmesser d₁ ausgebildet, der in etwa 55 % des Wälzkörperaußendurchmessers D₁ an der die Öffnung der Höhlung 21 beinhaltenden Stirnseite des Wälzkörpers 10 ist. Weiterhin ist auch der Durchmesser d₂ der Höhlung 22 in ihrem im wesentlichen zylindrischen Bereich etwa 60 % des Wälzkörperaußendurchmessers D₂ an der die Öffnung der Höhlung 22 beinhaltenden Stirnseite des Wälzkörpers 10. Weiterhin ist die Wandstärke des Wälzkörpers 10 im Bereich der Höhlungen 21 und 22 in etwa 20 % des Wälzkörperaußendurchmessers D₁ bzw. D₂. Gemäß dem allgemeinen Gedanken der Erfindung sind die Durchmesser d₁ und d₂ der Höhlungen 21 und 22 in deren im wesentlichen zylindrischen Bereich zwischen 40 bis 70 % des jeweiligen Wälzkörperaußendurchmessers D₁ bzw. D₂ und die Wandstärke des Wälzkörpers 10 ist im Bereich der Höhlungen 21 und 22 im Bereich zwischen 15 % bis 30 % des jeweiligen Wälzkörperaußendurchmessers D₁ bzw. D₂. Dadurch wird eine ausreichende Steifigkeit des Wälzkörpers 10 im Bereich der Höhlungen 21 und 22 erzielt, gleichzeitig aber zur Vermeidung der eingangs genannten, an sich unerwünschten hohen Spannungsspitzen, eine gewisse Einfederungsmöglichkeit des Wälzkörpers im Bereich der Höhlungen 21 und 22 erzielt.

Weiterhin wird zur Vermeidung der eingangs beschriebenen, an sich unerwünschten hohen Spannungsspitzen, der Wälzkörper 10 in Übergangsbereichen von seinem Außenmantel hin zu seinen Stirnseiten mit einer Verrundung ausgebildet, die von Einsatzfall zu Einsatzfall an die jeweilige Belastungsanforderung angepasst ausgebildet sein kann.

Weiterhin ist der Wälzkörper 10 ausschließlich in einem sich unterhalb des Außenmantels und unterhalb der durchmessergrößeren Stirnseite erstreckenden Randschichtbereich 30 induktiv gehärtet. Dabei beträgt die Dicke des Randschichtbereichs 30 einige Prozent eines mittleren Durchmessers des Wälzkörpers 10. Dadurch bleibt der Wälzkörper 10 mit Vorteil bei Belastung elastisch, so dass auch die vorausgehend beschriebenen Eigenschaften und Vorteile des Wälzkörpers 10 erhalten bleiben. Neben diesem Vorteil sind als weitere Vorteile des induktiven Randschichthärtens, beispielsweise gegenüber einem Durchhärten zu nennen, dass mit Vorteil keine Entkohlung beim Härten auftritt und damit mit Vorteil das Risiko von Rissbildungen herabgesetzt ist, dass nur ein sehr geringer Härteverzug auftritt, und dass keine Nachbearbeitung innerhalb der Höhlungen 21 und 22 notwendig sind.

Dabei ist der Außenmantel des Wälzkörpers 10 zwischen den Übergangsbereichen zu seinen beiden Stirnseiten hin im wesentlichen eben ausgebildet und auch eine Abrollfläche für den Wälzkörper 10 ist entsprechend eben ausgebildet, so dass sich in Verbindung mit den vorausgehend beschriebenen Maßnahmen zur Vermeidung besagter Spannungsspitzen mit Vorteil eine an sich gleichmäßige mechanischen Spannungsverteilung bei Betrieb des Wälzkörpers 10 ergibt.

In anderen Ausführungsformen kann aber der Außenmantel des Wälzkörpers zwischen besagten Übergangsbereichen auch nach außen hin ausgebaucht ausgebildet sein, wobei dann auch die Abrollfläche für den Wälzkörper zum Wälzkörper hin ausgebaucht oder nach innen hin eingebaucht ausgebildet sein kann. Auch eine entsprechende Einbauchung des Außenmantels des Wälzkörpers ist in wiederum anderen Ausführungsformen denkbar, wobei dann die Abrollfläche für den Wälzkörper zum Wälzkörper hin ausgebaucht sein sollte. In anderen Ausführungsformen kann der Wälzkörper auch aus einer Keramik ausgebildet sein.

## Patentansprüche

1. Kegelstumpfartiger Wälzkörper (10), der ausgehend von seinen beiden Stirnseiten mit jeweils einer Höhlung (21, 22) ausgebildet ist, wobei zwischen den Höhlungen (21, 22) ein mit Material des Wälzkörpers (10) ausgefüllter Zwischenbereich verbleibt, dessen minimale axiale Dicke (bₘᵢₙ) zwischen 20 % bis 60 % der axialen Wälzkörperlänge (L) ist, und wobei ein Durchmesser (d₁, d₂) eines im wesentlichen zylindrischen Bereichs wenigstens einer der Höhlungen (21, 22) zwischen 40 % bis 70 % des Wälzkörperaußendurchmessers (D₁, D₂) an der die Öffnung der Höhlung (21, 22) beinhaltenden Stirnseite ist.

2. Wälzkörper (10) nach Anspruch 1, wobei die minimale axiale Dicke (bₘᵢₙ) zwischen 20 % und 40 % der axialen Wälzkörperlänge (L) ist.

3. Wälzkörper (10) nach einem der Ansprüche 1 oder 2, wobei eine mittlere Wandstärke des Wälzkörpers (10) im Bereich wenigstens einer der Höhlung (21, 22) zwischen 15 % und 30 % des Wälzkörperaußendurchmessers (D₁, D₂) an der die Öffnung der Höhlung (21, 22) beinhaltenden Stirnseite ist.

4. Wälzkörper (10) nach Anspruch 3, wobei die Wandstärke in im wesentlichen zylindrischen Bereich der Höhlung (21, 22) zwischen 15 und 25% liegt.

5. Wälzkörper (10) nach einem der Ansprüche 1 bis 4, wobei die Höhlung (22) am durchmessergrößeren axialen Ende des Wälzkörpers (10) eine größere axiale Tiefe aufweist als die Höhlung (21) am durchmesserkleineren axialen Ende des Wälzkörpers (10).

6. Wälzkörper (10) nach einem der Ansprüche 1 bis 5, wobei wenigstens eine der Höhlungen (21, 22) zum Zwischenbereich hin sphärisch ausgebildet ist.

7. Wälzkörper (10) nach einem der Ansprüche 1 bis 6, wobei der Wälzkörper (10) in wenigstens einem Übergangsbereich von seinem Außenmantel hin zu einer seiner Stirnseiten mit einer Verrundung ausgebildet ist, wobei die Verrundung insbesondere an die jeweilige Belastungsanforderung angepasst ist.

8. Wälzkörper (10) nach einem der Ansprüche 1 bis 7, wobei der Wälzkörper (10) materialeinheitlich und einstückig ausgebildet ist.

9. Wälzkörper (10) nach einem der Ansprüche 1 bis 8, wobei der Wälzkörper (10) aus einem härtbaren Material ausgebildet ist und eine Schicht unterhalb des Außenmantels des Wälzkörpers (10) gehärtet ist, wobei sich die Schicht insbesondere auch unterhalb der durchmessergrößeren Stirnseite des Wälzkörpers (10) erstreckt, wobei die Schicht insbesondere eine Randschicht ist, deren Dicke insbesondere einige Prozent des mittleren Durchmessers des Wälzkörpers (10) beträgt, wobei die Schicht insbesondere durch Induktivhärten erzeugt ist und/oder wobei der Wälzkörper (10) insbesondere außerhalb der Schicht ungehärtet ist.

10. Wälzkörper (10) nach einem der Ansprüche 1 bis 9, wobei der Wälzkörper (10) aus Stahl oder Keramik ausgebildet ist.

11. Wälzkörper (10) nach einem der Ansprüche 1 bis 10, wobei der Außenmantel des Wälzkörpers (10) zwischen den Übergangsbereichen zu seinen beiden Stirnseiten hin im wesentlichen nach außen ausgebaucht, eben oder nach innen eingebaucht ausgebildet ist.

12. Kegelrollenlagerung mit Wälzkörpern (10) nach einem der Ansprüche 1 bis 11, wobei ein Außenmantel jedes Wälzkörpers (10) zwischen den Übergangsbereichen zu den Stirnseiten hin im wesentlichen eben ist und wenigstens eine der beiden zugehörigen Abrollflächen für die Wälzkörper (10) eben oder zu den Wälzkörpern (10) hin ausgebaucht ist.

13. Kegelrollenlagerung mit Wälzkörpern (10) nach einem der Ansprüche 1 bis 11, wobei ein Außenmantel jedes Wälzkörpers (10) zwischen den Übergangsbereichen zu den Stirnseiten hin im wesentlichen nach außen ausgebaucht ausgebildet ist und wenigstens eine der beiden zugehörigen Abrollflächen für die Wälzkörper (10) eben, aus- oder eingebaucht ist.

14. Kegelrollenlagerung mit Wälzkörpern (10) nach einem der Ansprüche 1 bis 11, wobei ein Außenmantel jedes Wälzkörpers (10) zwischen den Übergangsbereichen zu den Stirnseiten hin im wesentlichen nach innen eingebaucht ausgebildet ist und wenigstens eine der beiden zugehörigen Abrollflächen für die Wälzkörper (10) zu den Wälzkörpern (10) hin ausgebaucht ist.

## Claims

1. Frustoconical rolling body (10) which is configured with in each case one cavity (21, 22) starting from its two end sides, an intermediate region which is filled with material of the rolling body (10) remaining between the cavities (21, 22), the minimum axial thickness (bₘᵢₙ) of which intermediate region is between 20% and 60% of the axial rolling body length (L), and a diameter (d₁, d₂) of a substantially cylindrical region of at least one of the cavities (21, 22) being between 40% and 70% of the rolling body outer diameter (D₁, D₂) on the end side which contains the opening of the cavity (21, 22).

2. Rolling body (10) according to Claim 1, the minimum axial thickness (bₘᵢₙ) being between 20% and 40% of the axial rolling body length (L).

3. Rolling body (10) according to either of Claims 1 and 2, a mean wall thickness of the rolling body (10) in the region of at least one of the cavities (21, 22) being between 15% and 30% of the rolling body outer diameter (D₁, D₂) on the end side which contains the opening of the cavity (21, 22).

4. Rolling body (10) according to Claim 3, the wall thickness in the substantially cylindrical region of the cavity (21, 22) lying between 15 and 25%.

5. Rolling body (10) according to one of Claims 1 to 4, the cavity (22) at the axial end of greater diameter of the rolling body (10) having a greater axial depth than the cavity (21) at the axial end of smaller diameter of the rolling body (10).

6. Rolling body (10) according to one of Claims 1 to 5, at least one of the cavities (21, 22) being of spherical configuration towards the intermediate region.

7. Rolling body (10) according to one of Claims 1 to 6, the rolling body (10) being configured with a rounded portion in at least one transitional region from its outer shell towards one of its end sides, the rounded portion being adapted, in particular, to the respective loading requirement.

8. Rolling body (10) according to one of Claims 1 to 7, the rolling body (10) being formed from a uniform material and in one piece.

9. Rolling body (10) according to one of Claims 1 to 8, the rolling body (10) being configured from a hardenable material, and a layer below the outer shell of the rolling body (10) being hardened, the layer also extending, in particular, below the end side of greater diameter of the rolling body (10), the layer being, in particular, an edge layer, the thickness of which is, in particular, a few per cent of the mean diameter of the rolling body (10), the layer being produced, in particular, by way of inductive hardening and/or the rolling body (10) being non-hardened, in particular, outside the layer.

10. Rolling body (10) according to one of Claims 1 to 9, the rolling body (10) being formed from steel or ceramic.

11. Rolling body (10) according to one of Claims 1 to 10, the outer shell of the rolling body (10) being of substantially outwardly bulged, planar or inwardly indented configuration between the transitional regions towards its two end sides.

12. Tapered roller bearing set having rolling bodies (10) according to one of Claims 1 to 11, an outer shell of each rolling body (10) being substantially planar between the transitional regions towards the end sides, and at least one of the two associated rolling faces for the rolling bodies (10) being planar or bulged towards the rolling bodies (10).

13. Tapered roller bearing set having rolling bodies (10) according to one of Claims 1 to 11, an outer shell of each rolling body (10) being of substantially outwardly bulged configuration between the transitional regions towards the end sides, and at least one of the two associated rolling faces for the rolling bodies (10) being planar, bulged or indented.

14. Tapered roller bearing set having rolling bodies (10) according to one of Claims 1 to 11, an outer shell of each rolling body (10) being of substantially inwardly indented configuration between the transitional regions towards the end sides, and at least one of the two associated rolling faces for the rolling bodies (10) being bulged towards the rolling bodies (10).

## Revendications

1. Corps de roulement tronconique (10), qui est réalisé avec respectivement une cavité (21, 22) à partir de ses deux côtés frontaux, une région intermédiaire remplie du matériau du corps de roulement (10) restant entre les cavités (21, 22), dont l'épaisseur axiale minimale (bₘᵢₙ) représente de 20 % à 60 % de la longueur axiale du corps de roulement (L), et un diamètre (d₁, d₂) d'une région essentiellement cylindrique d'au moins l'une des cavités (21, 22) représentant de 40 % à 70 % du diamètre extérieur du corps de roulement (D₁, D₂) au niveau du côté frontal comportant l'ouverture de la cavité (21, 22).

2. Corps de roulement (10) selon la revendication 1, dans lequel l'épaisseur axiale minimale (bₘᵢₙ) représente entre 20 % et 40 % de la longueur axiale du corps de roulement (L).

3. Corps de roulement (10) selon l'une quelconque des revendications 1 et 2, dans lequel une épaisseur moyenne de paroi du corps de roulement (10) dans la région d'au moins l'une des cavités (21, 22) représente entre 15 % et 30 % du diamètre extérieur du corps de roulement (D₁, D₂) au niveau du côté frontal comportant l'ouverture de la cavité (21, 22).

4. Corps de roulement (10) selon la revendication 3, dans lequel l'épaisseur de paroi dans la région essentiellement cylindrique de la cavité (21, 22) se situe entre 15 et 25 %.

5. Corps de roulement (10) selon l'une quelconque des revendications 1 à 4, dans lequel la cavité (22) à l'extrémité axiale de grand diamètre du corps de roulement (10) présente une plus grande profondeur axiale que la cavité (21) à l'extrémité axiale de petit diamètre du corps de roulement (10).

6. Corps de roulement (10) selon l'une quelconque des revendications 1 à 5, dans lequel au moins l'une des cavités (21, 22) est réalisée de manière sphérique en direction de la région intermédiaire.

7. Corps de roulement (10) selon l'une quelconque des revendications 1 à 6, le corps de roulement (1) étant réalisé avec un arrondi dans au moins une région de transition de son enveloppe extérieure à l'un de ses côtés frontaux, l'arrondi étant adapté en particulier à l'exigence de charge respective.

8. Corps de roulement (10) selon l'une quelconque des revendications 1 à 7, le corps de roulement (1) étant venu de matière et réalisé d'une seule pièce.

9. Corps de roulement (10) selon l'une quelconque des revendications 1 à 8, le corps de roulement (10) étant réalisé à partir d'un matériau pouvant être trempé et une couche en dessous de l'enveloppe extérieure du corps de roulement (1) étant trempée, la couche s'étendant en particulier également en dessous du côté frontal de plus grand diamètre du corps de roulement (10), la couche étant en particulier une couche de bord dont l'épaisseur vaut en particulier quelques pour cent du diamètre moyen du corps de roulement (10), la couche étant produite en particulier par trempe par induction et/ou le corps de roulement (10) étant non trempé en particulier à l'extérieur de la couche.

10. Corps de roulement (10) selon l'une quelconque des revendications 1 à 9, le corps de roulement (10) étant réalisé en acier ou en céramique.

11. Corps de roulement (1) selon l'une quelconque des revendications 1 à 10, dans lequel l'enveloppe extérieure du corps de roulement (1) est, entre les régions de transition vers ses deux côtés frontaux, réalisée de manière essentiellement bombée vers l'extérieur, de manière plane ou de manière bombée vers l'intérieur.

12. Roulement à rouleaux coniques comprenant des corps de roulement (10) selon l'une quelconque des revendications 1 à 11, dans lequel une enveloppe extérieure de chaque corps de roulement (10) entre les régions de transition vers les côtés frontaux est essentiellement plane et au moins l'une des deux surfaces de roulement associées pour les corps de roulement (10) est réalisée de manière plane ou de manière bombée vers les corps de roulement (10).

13. Roulement à rouleaux coniques comprenant des corps de roulement (10) selon l'une quelconque des revendications 1 à 11, dans lequel une enveloppe extérieure de chaque corps de roulement (10) entre les régions de transition vers les côtés frontaux est réalisée de manière essentiellement bombée vers l'extérieur et au moins l'une des deux surfaces de roulement associées pour les corps de roulement (10) est réalisée de manière plane, bombée vers l'extérieur ou bombée vers l'intérieur.

14. Roulement à rouleaux coniques comprenant des corps de roulement (10) selon l'une quelconque des revendications 1 à 11, dans lequel une enveloppe extérieure de chaque corps de roulement (10) entre les régions de transition vers les côtés frontaux est réalisée de manière essentiellement bombée vers l'intérieur et au moins l'une des deux surfaces de roulement associées pour les corps de roulement (10) est réalisée de manière bombée vers les corps de roulement (10).
